# EUROPEAN PATENT APPLICATION

(11) **EP 4 398 589 A1**
(43) Date of publication of application: **10.07.2024**
(21) Application number: 22865062.8
(22) Date of filing: 01.09.2022
(51) Int. Cl.: H04N 23/00, H04N 25/70, G03B 17/55

(54) **CAMERA MODULE**

(30) Priority: 02.09.2021 KR 20210117265
(71) Applicant: LG INNOTEK CO., LTD., Seoul 07796 (KR)
(72) Inventor: LEE, Min Woo, Seoul 07796 (KR); HWANG, Sun Min, Seoul 07796 (KR)
(74) Representative: Plasseraud IP
(86) International application number: PCT/KR2022/013094
(87) International publication number: WO 2023/033560

(57) **Abstract**

A camera module according to an embodiment of the present invention comprises: a lens barrel which accommodates a lens; a sensor which receives light passed through the lens; a first substrate having the sensor arranged on a first surface thereof; a second substrate which is apart from the first substrate and has at least one light source device arranged thereon; a first body which includes a lens barrel accommodating portion including a first hole in which the lens barrel is accommodated, and a second hole formed in the light-emitting direction of the light source device; and a second body coupled to the first body, wherein the first substrate and the second substrate are arranged in the inner space formed by the first body and the second body, and the sensor includes a ToF sensor.

## Description

### [Title of Invention]

### CAMERA MODULE

### [Technical Field]

The present invention relates to a camera module, and more specifically, to a camera module in which a TOF sensor and a light source are disposed on different substrates.

### [Background Art]

Research on devices capable of acquiring depth images that can obtain distance information to an object has recently been on the rise.

Following this trend, a time-of-flight (TOF) module has been introduced as a depth image acquisition device. The TOF module acquires depth images by irradiating light to an object and then measuring the flight time of a light in which the light being reflected from the object is received by a light receiving unit.

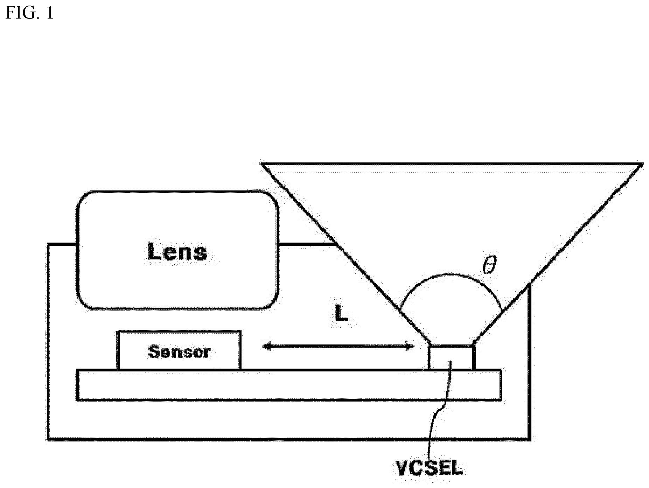

As shown in FIG. 1, light emitted from a VCSEL, a light source element, is emitted from an object and generates a depth image in a sensor that receives the light through a lens.

However, the accuracy of the depth image varies depending on the distance between the VCSEL, which is the light emitting unit, and the lens and sensor, which are the light receiving unit. If the VCSEL and the TOF sensor are close together, accuracy increases, but if the distance is too close, there is a problem in that the lens becomes caught in the VCSEL's light emission angle of view. When a TOF sensor and a VCSEL are formed on the same substrate, module size and performance are affected for the above reasons. In addition, there is also a problem that the heat generated by the VCSEL may affect the sensor.

### [Detailed Description of the Invention]

### [Technical Subject]

The technical problem to be solved by the present invention is to provide a camera module in which a TOF sensor and a light source are disposed in different substrates.

### [Technical Solution]

In order to solve the above technical challenges, a camera module according to an embodiment of the present invention comprises: a lens barrel which accommodates a lens; a sensor which receives light passed through the lens; a first substrate having the sensor being disposed on a first surface thereof; a second substrate which is apart from the first substrate and has at least one light source device being disposed thereon; a first body which includes a lens barrel accommodating portion including a first hole in which the lens barrel is accommodated, and a second hole being formed in a light-emitting direction of the light source device; and a second body being coupled to the first body, wherein the first substrate and the second substrate are disposed in the inner space being formed by the first body and the second body, and wherein the sensor includes a ToF sensor.

In addition, it may include a flexible substrate connecting the first substrate and the second substrate.

In addition, the first body includes: a first region being formed with the lens barrel accommodating portion; a second region being spaced apart from the first region in an optical axis direction and being formed with the second hole; an upper plate including a third region connecting the first region and the second region; and a side plate being extended from the upper plate, wherein the first region and the second region of the upper plate may form a step.

In addition, the lens barrel accommodating portion may be formed by being extended from the first region and the third region.

In addition, when the lens barrel is accommodated in a lens barrel accommodating portion, it may include a recessed portion being formed in the second region and the third region in a position corresponding to the lens barrel and corresponding to the shape of the lens barrel.

In addition, the cross-section of the second hole is in the shape of a cube; the second hole is inclinedly formed so that the cross-sectional region is expanded in a light emission direction of the light source element; and the surface adjacent to the recessed portion among the four inclined surfaces of the second hole may include ribs being formed according to the shape of the recessed portion.

In addition, the second body includes: a base; and a side plate being extended vertically from the base, wherein a side plate of the second body may comprise: a body portion being extended vertically from the base; a first extension portion being extended from the body portion; and a second extension portion adjacent to the first extension portion and being extended from the side plate of the second body and formed with a coupling hole.

In addition, the side plate of the first body may include: a first accommodating portion in which the first extension portion is accommodated at a position corresponding to the first extension portion; and a second accommodating portion being accommodated with the second extension portion in a position corresponding to the second extension portion and includes a protrusion being coupled to a coupling hole of the second extension portion.

In addition, the side plate of the second body may include: a first side plate including one first extension portion and two second extension portions being formed on both sides of the first extension portion; and a second side plate including one second extension portion and two first extension portions being formed on both sides of the second extension portion.

In addition, the cross-sectional region of the second hole corresponds to the cross-sectional region of the light source element, and may be formed to be inclined so as to widen the cross-sectional area in a light emission direction.

In addition, the inclined angle of the second hole may correspond to the light emission angle of the light source element.

In addition, the second body may include a heat sink.

In addition, the first body and the second body may include a third hole through which a connector being connected to the outside in a direction perpendicular to the optical axis or power connector where power source is connected passes through.

### [Advantageous Effects]

According to embodiments of the present invention, the sensor and the light source element can be disposed close to each other, thereby improving the accuracy of the TOF camera module. Additionally, by forming the sensor and the light source element on different substrates, the heat generation and expansion of the sensor due to heat generation from the light source element can be minimized, thereby improving high temperature resolution. In addition, by forming a step in the front body, it is possible to solve the problem of the angle of view of the light source element being blocked and minimize the size of the device. Furthermore, even though the sensor and the light source element are formed on different substrates, the gap between the sensor and the light source element can be firmly maintained, thereby maintaining the reliability of the TOF camera module.

### [Brief Description of Drawings]

FIG. 1 is a diagram for explaining a comparative example of a camera module according to an embodiment of the present invention.
FIG. 2 is a perspective view of a camera module according to an embodiment of the present invention.
FIG. 3 is an exploded perspective view of a camera module according to an embodiment of the present invention.
FIG. 4 is a perspective view of a first body of a camera module according to an embodiment of the present invention.
FIG. 5 is a top view of a first body of a camera module according to an embodiment of the present invention.
FIG. 6 is a cross-sectional view of a camera module according to an embodiment of the present invention.
FIG. 7 is a perspective view of a first substrate of a camera module according to an embodiment of the present invention.
FIG. 8 is a perspective view of a first to third substrates of a camera module according to an embodiment of the present invention combined.
FIG. 9 is a side view of a first to third substrates of a camera module according to an embodiment of the present invention combined.
FIG. 10 is a perspective view of a second body of a camera module according to an embodiment of the present invention.
FIG. 11 is a perspective view viewed from a lower portion of a second body of a camera module according to an embodiment of the present invention.
FIG. 12 is a perspective view of a second extension portion of a camera module according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or arranged in "on (above)" or "below (under)" of each component, "on (above)" or "below (under)" means that it includes not only the case where the two components are directly in contact with, but also the case where one or more other components are formed or arranged between the two components. In addition, when expressed as "on (above)" or "below (under)", the meaning of not only an upward direction but also a downward direction based on one component may be included.

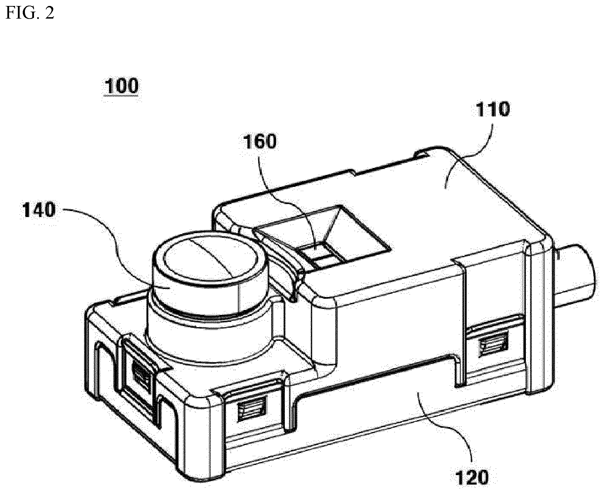

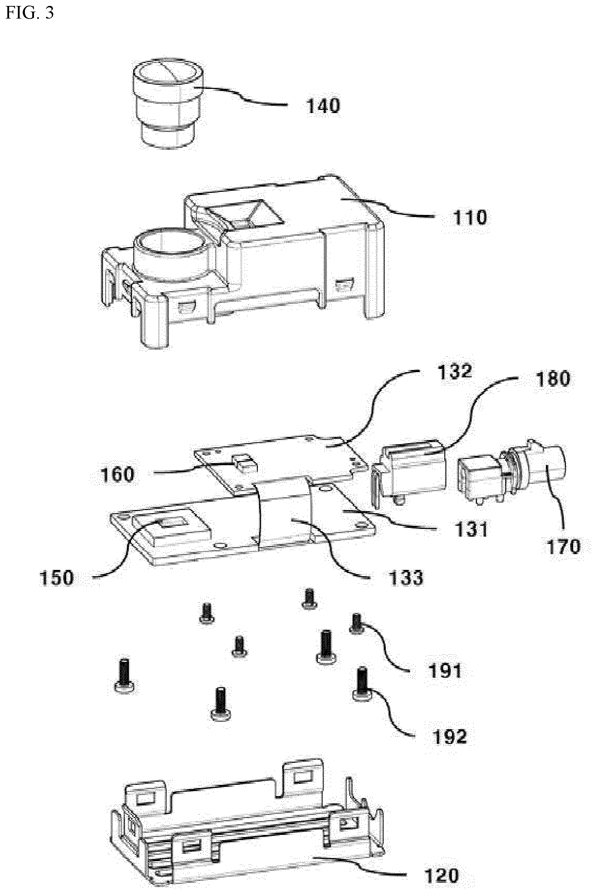

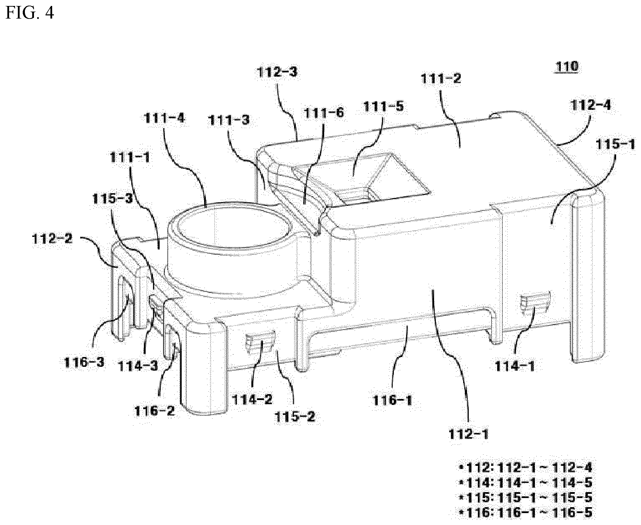

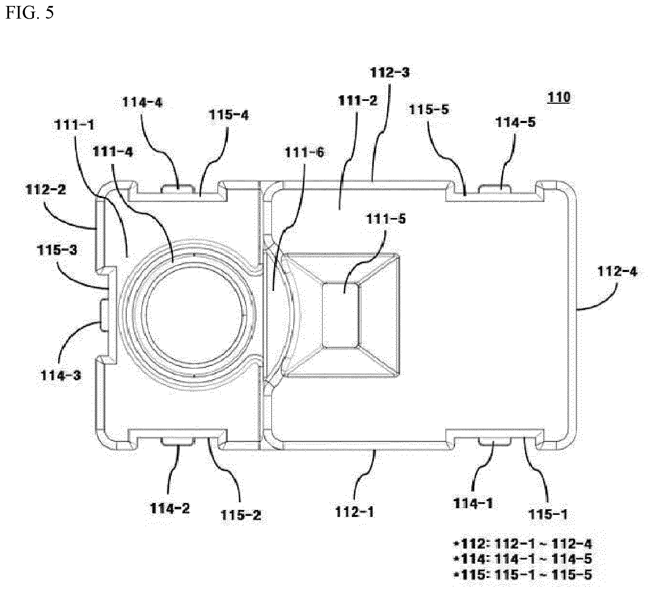

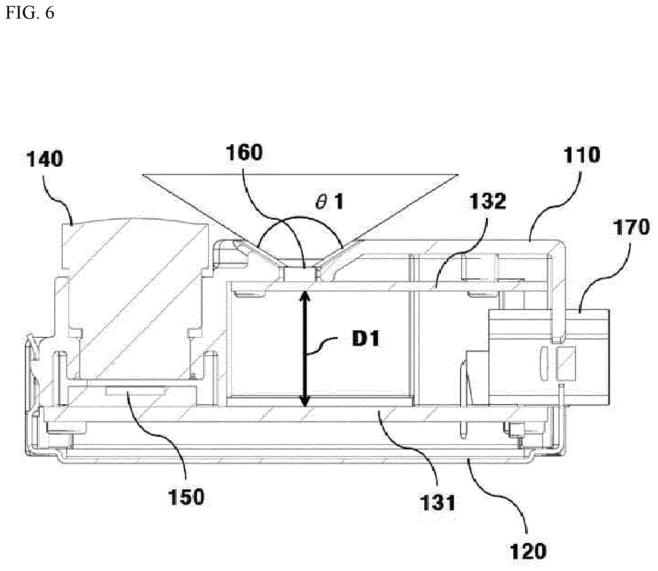

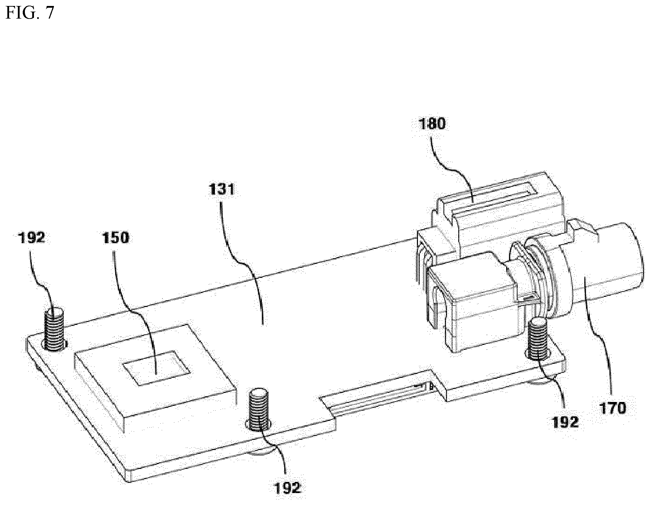

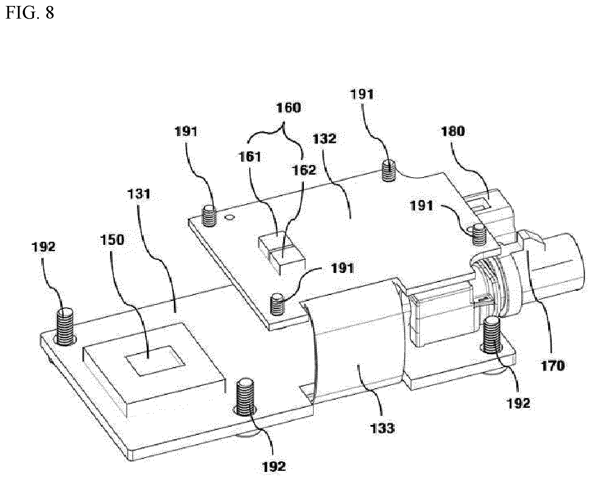

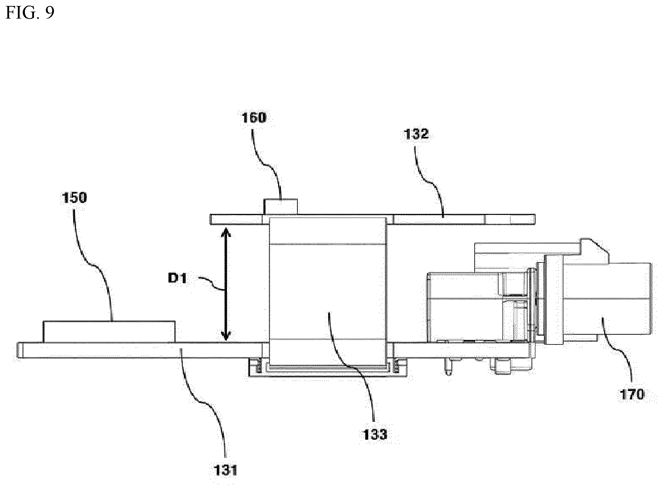

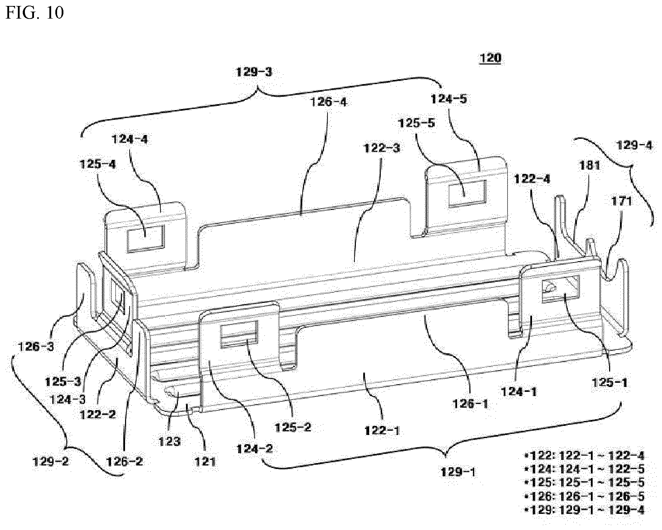

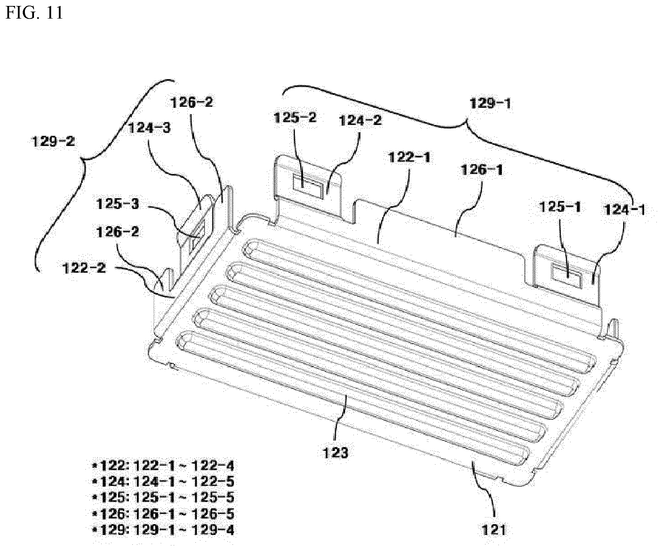

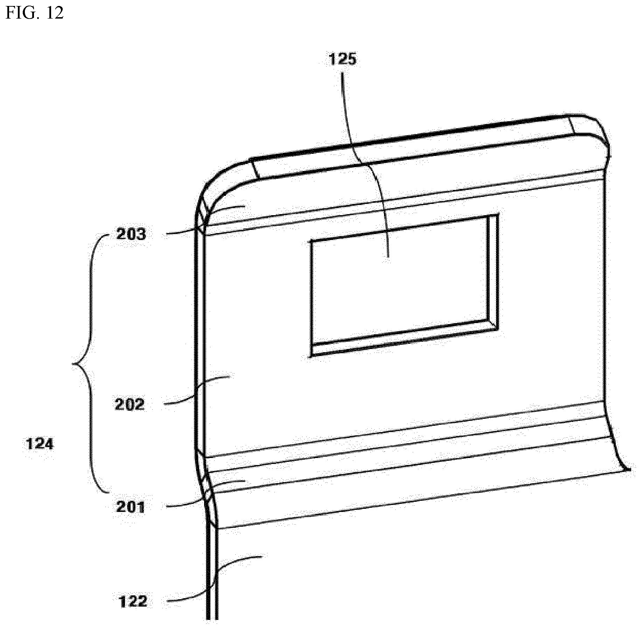

FIG. 2 is a perspective view of a camera module according to an embodiment of the present invention; FIG. 3 is an exploded perspective view of a camera module according to an embodiment of the present invention; FIG. 4 is a perspective view of a first body of a camera module according to an embodiment of the present invention; FIG. 5 is a top view of a first body of a camera module according to an embodiment of the present invention; FIG. 6 is a cross-sectional view of a camera module according to an embodiment of the present invention; FIG. 7 is a perspective view of a first substrate of a camera module according to an embodiment of the present invention; FIG. 8 is a perspective view of a first to third substrates of a camera module according to an embodiment of the present invention combined; FIG. 9 is a side view of a first to third substrates of a camera module according to an embodiment of the present invention combined; FIG. 10 is a perspective view of a second body of a camera module according to an embodiment of the present invention; FIG. 11 is a perspective view viewed from a lower portion of a second body of a camera module according to an embodiment of the present invention; and FIG. 12 is a perspective view of a second extension portion of a camera module according to an embodiment of the present invention.

The camera module **100** according to an embodiment of the present invention comprises a body, a plurality of substrates, a lens, a sensor, and a light source element.

The lens barrel 140 accommodates a lens. The lens may include one or more lenses and may be accommodated in the lens barrel 140 and the lens barrel accommodating portion 111-4 of the first body 110. The lens may include a plurality of lenses considering lens imaging, aberration correction, or zoom functions. A plurality of lenses may be repeatedly disposed and assembled to form a micro lens array (MLA).

The sensor 150 receives light passing through the lens. Here, the sensor 150 includes a TOF sensor. The TOF sensor is a sensor that measures flight time. When light is emitted from the light source element **160,** reflected from the object, and received, it creates a depth image using the time from being emitted from the light source element to being received. Depending on the distance measurement method, TOF sensors include indirect TOF sensors **I-TOF** that use phase differences and direct TOF sensors **D-TOF** that directly measure time differences. Direct TOF sensors are also referred to as LIDAR sensors. The sensor **150** may be an image sensor and may include an RGB sensor.

The light source element **160** emits light. The light being emitted from the light source element may be infrared or near-infrared. The light source element **160** may be a light emitting diode (LED), a laser diode (LD), or a super luminescent diode (SLD). The light source element **160** may be configured to further include other optical members for irradiating frequency-modulated light to an object, controlling the path of the irradiated light, or forming a pattern. The light source element **160** may include a plurality of light source elements **161** and **162.** The plurality of light source elements **161** and **162** may be disposed in an array form.

The light source element **160** may include a VCSEL. VCSEL is a vertical cavity surface light-emitting laser that converts electrical signals into optical signals and emits lasers in a direction perpendicular to the upper surface that emits light.

The sensor **150** generates a depth image by measuring the distance to the object using light emitted from the light source element **160,** reflected from the object, and received through the lens; and a 3D image can be generated using the RGB image and depth image being generated from the image sensor.

The sensor **150** is disposed on the first substrate **131,** and the light source element **160** is disposed on the second substrate **132.** Here, the first substrate **131** and the second substrate **132** are arranged to be spaced apart from each other in an internal space formed by the first body **110** and the second body **120.** Because the sensor **150** and the light source element **160** are formed in different substrates, their influence on each other can be reduced. When the light source element **160** converts an electrical signal into an optical signal and emits light, heat is generated. The sensor **150** is an image sensor that generates a lot of heat, and its performance may deteriorate due to heat. By forming the sensor **150** and the light source element **160** in different substrates, heat being generated from the light source element **160** can be prevented from affecting the sensor **150.**

The first substrate **131** and the second substrate **132** may be connected through a flexible substrate. The first substrate **131** and the second substrate **132** may be a rigid substrate or may be connected through a flexible substrate. In order to receive a control signal from a control unit (not shown) or transmit a control signal, the first substrate **131** and the second substrate **132** may be connected to each other. The control unit is disposed on the first to second substrates **131** and **132** and can transmit a control signal to another substrate in which the control unit is not disposed through the third substrate **133,** which is a flexible substrate. When receiving a control signal from an externally located control unit, one of the first substrate **131** or the second substrate **132** is connected to the connector **170** being connected to the outside, and other substrates can receive control signals from a substrate being connected to the outside.

The first substrate **131** and the second substrate **132** may be connected to the third substrate **133,** which is a flexible substrate, through a connector, or may be directly connected inside the substrate. A rib is formed inside the portion where the third substrate **133** is connected to form a space in which the third substrate **133** can be bent. The first substrate **131** and the second substrate **132** may be connected using a rigid substrate in addition to a flexible substrate, may be connected in various other ways, or may be connected to each connector instead of being connected to each other.

The first body **110** includes: a lens barrel accommodating portion **111-4** including a first hole in which the lens barrel **140** is accommodated; and a second hole **111-5** being formed in a light emission direction of the light source element **160.** The first body **110** is a body located in a direction in which light is emitted from the light source element **160** and the lens receives the light, and may be referred to as a front body or an upper body. The lens barrel accommodating portion **111-4** is formed to correspond to the shape of the lens barrel **140** so that the lens barrel **140** can be accommodated, and the first hole is formed so that the sensor **150** being disposed on the first substrate **131** can receive the light that has passed through the lens being accommodated in the lens barrel **140.** The lens barrel accommodating portion **111-4** may include a bracket portion being protruded upward to accommodate the lens barrel **140.** In addition, the first body **110** includes a second hole **111-5** so that light emitted from the light source device **160** being disposed on the second substrate **132** is emitted to the outside.

The first body **110** is configured with an upper plate and a side plate **112.**

The upper plate of the first body **110** comprises: a first region **111-1** where the lens barrel accommodating portion **111-4** is formed; a second region **111-2** being spaced apart from the first region 111-1 in an optical axis direction to form a second hole **111-5;** a third region **111-3** connecting the first region **111-1** and the second region **111-2.** The first body **110** may include a side plate **112** being extended downward from the upper plate. The side plate **112** of the first body **110** not only forms an internal space where the substrate is disposed, but also serves to be coupled to the second body **120.**

A lens barrel accommodating portion **111-4** is formed on the first region **111-1** of the upper plate of the first body **110.** The first region **111-1** may include a first surface perpendicular to the optical axis and a lens barrel accommodating portion **111-4** being extended from the first surface to accommodate the lens barrel. As shown in FIG. 4, the lens barrel accommodating portion **111-4** is formed in a circular shape corresponding to the shape of the lens barrel **140** to be protruded, and a first hole capable of accommodating the lens barrel **140** may be formed inside.

A second hole **111-5** is formed on the second region **111-2** of the upper plate of the first body **110** at a position where light is emitted from the light source element **160.** The second hole **111-5** is a hole through which light is emitted from the light source element **160,** and the cross-sectional area of the second hole **111-5** corresponds to the cross-sectional area of the light source element **160,** and may be formed to be inclined to widen the cross-sectional area in a direction of light emission. The light source element **160** may be square or circular depending on the shape of the light source. The cross-sectional area of the second hole **111-5** may be formed to correspond to the cross-sectional area of the light source element **160.** The light source element **160** that emits surface light may have a square cross-section, and the cross-section of the second hole **111-5** may also have a square cross-section. Because light is emitted and spreads with a certain angle of view, which is the angle of light emission, in order not to impede the propagation of light, the cross-sectional area of the second hole **111-5** may be inclined to widen in a direction of light emission. When the cross-sectional area of the second hole **111-5** is square, the second hole 111-5 includes four inclined surfaces, and the inclined surfaces may be formed in a trapezoid. Here, the inclined angle of the second hole **111-5** may correspond to the light emission angle of the light source element **160.** As shown in FIG. 6, the inclined angle of the second hole **111-5** may be formed to correspond to the angle of view **91,** which is the light emission angle of the light source element **160.** Through this, the progress of the emitted light may not be interrupted. Or, in order to increase the directivity of light, the light emission angle may be formed using the degree of inclination. When the angle of view of the light source element **160** is greater than the target light emission angle, the angle of the inclined plane may be formed as the light emission angle so that the emitted light is emitted at the light emission angle.

The second hole **111-5** may include a cover to protect the light source element **160.** The cover is formed as a transparent window to protect the light source element **160** and may not interfere with light emission.

The second region **111-2** of the upper plate of the first body **110** is formed to be spaced apart from the first region **111-1** in an optical axis direction, and includes a second surface being spaced apart from the first region **111-1** in an optical axis direction. The first region **111-1** and the second region **111-2** may be spaced apart by **D1.** The first region 111-1 and the second region **111-2** may be spaced apart from each other to form a step. At this time, the first region **111-1** and the second region **111-2** may be connected to each other through the third region **111-3.** At this time, the first region **111-1** and the second region **111-2** are upper plates of different heights, and the third region **111-3** can be referred to as a side plate being extended from one upper plate to another upper plate to connect the two upper plates. The length of the third region **111-3** extended in an optical axis direction may be **D1.**

The lens barrel accommodating portion **111-4** may be formed to be extended from the first region **111-1** and the third region **111-3.** That is, the lens barrel accommodating portion **111-4** is formed by being extended in an optical axis direction from the first region **111-1,** but a portion of the side surfaces of the lens barrel accommodating portion **111-4** may be connected to the third region **111-3.** The lens barrel accommodating portion **111-4** formed by being extended to the first region **111-1** and the third region **111-3** perpendicular to the first region **111-1** and is fixed in both directions perpendicular to each other so that the lens barrel **140** can be firmly fixed to the camera module **100.**

The lens barrel **140** is located on the first region **111-1,** and the light source element **160** is located on the second region **111-2.** At this time, the second substrate **132** in which the light source element **160** is disposed is spaced apart from the first substrate **131** in an optical axis direction. As shown in FIG. 6, the first substrate 131 and the second substrate **132** are spaced apart from each other at a preset distance **D1.** The second substrate **132** is fixed to the second region **111-2** of the first body **110** so that the light source element **160** being disposed on the second substrate **132** can be located in the second hole **111-5.** Therefore, in order for the second substrate **132** to maintain a distance of more than **D1** from the first substrate **131,** the second region **111-2** of the first body **110** must also maintain a sufficient distance from the first substrate **131.** To this end, the second region **111-2** may be formed to be spaced apart from the first region **111-1** in an optical axis direction.

By separating the second substrate **132** from the first substrate 131 in an optical axis direction, the distance between the light source element **160** and the sensor **150** in a direction perpendicular to the optical axis can be reduced. The light emitted from the light source element **160** is directly emitted to the lens and is directly received by the lens, or when the light received by the lens is interrupted, an error may occur in generating a depth image. Therefore, there must be sufficient separation between the lens and the light source element **160** so that the lens is not located at the light emission angle. As shown in FIG. 1, when the sensor and the VCSEL, a light source element, are formed on the same substrate, the sensor must be separated from the VCSEL by more than a length **L** so that the light does not affect the lens. In contrast, the second substrate **132** is spaced apart from the first substrate **131** by **D1,** because the area of influence narrows depending on the angle of view at the same height, the light source element **160** can be disposed close to the sensor **150** in a direction perpendicular to the optical axis direction, as shown in FIG. 6. In other words, it is possible to miniaturize the module without interference from light.

When the lens barrel **140** is accommodated in the lens barrel accommodating portion **111-4,** a recessed portion **111-6** being formed on the second region **111-2** and the third region **111-3** corresponding to the shape of the lens barrel 140 may be included at a position corresponding to the lens barrel **140.** A portion of the lens barrel **140** may be disposed in the recessed portion **111-6.** However, even in this case, the lens barrel **140** is not overlapped with the beam angle of the light source element **160,** that is, the optical path.

When the sensor **150** and the light source element 160 are disposed close to each other, because the position of the lens barrel **140** coincides with the sensor **150** in an optical axis direction, the distance between the lens barrel **140** and the light source element **160** to the second hole **111-5** also becomes closer. The lens barrel **140** is accommodated in the lens barrel accommodating portion **111-4** formed on the first region **111-1,** and as the lens barrel **140** and the light source element **160** are disposed close to each other, the area where the lens barrel accommodating portion **111-4** and the second hole **111-5** are formed become closer. As a result, there is interference between the lens barrel **140** and the second region **111-2** of the first body **110,** or according to space constraints due to interference between the lens barrel **140** and the second region **111-2** of the first body **110** it may be difficult to dispose the light source element **160** and the sensor **150** close to each other. In addition, the process of coupling the lens barrel 140 to the lens barrel accommodating portion **111-4** may be difficult due to the narrow space at the corresponding location.

The recessed portion **111-6** is located at a position corresponding to the lens barrel **140,** the first body **110,** that is, in order to avoid interference at the location where the second region **111-2** and the third region **111-3** of the first body **110** meet, it is formed to correspond to the shape of the lens barrel **140.** That is, depending on the cylindrical shape of the lens barrel, it can be formed in a cylindrical shape so as to enter inside, as shown in FIG. 4. Owing to the shape of the recessed portion **111-6,** since interference with the lens barrel **140** can be reduced, the sensor **150** and the light source element **160** can be disposed closer together. In addition, the recessed portion **111-6** may be formed in a way that the surface of the recessed portion **111-6** is not to be in contact with the lens barrel **140** and is spaced apart at a predetermined interval to secure work space. Through this, the process of placing the lens barrel **140** in the lens barrel accommodating portion **111-4** can also be smoothly performed.

Depending on the shape of the recessed portion **111-6,** the recessed portion **111-6** may partially be overlapped with the second hole **111-5.** At this time, the cross-section of the second hole **111-5** is square, and the second hole **111-5** is inclinedly formed so as to widen the cross-sectional area in a light emission direction of the light source element **160,** wherein among the four inclined surfaces of the second hole **111-5,** the surface adjacent to the recessed portion **111-6** may include ribs being formed according to the shape of the recessed portion **111-6.** As shown in FIGS. 4 and 5, when the second hole **111-5** has a square cross-section, the surface being overlapped with the recessed portion **111-6** may be formed with a rib having partially concave portion according to the shape of the recessed portion **111-6.** Through the recessed portion **111-6** and the rib of the second hole **111-5,** the sensor **150** and the light source element **160** can be disposed as close as possible without interference between the lens and the emitted light or between the lens barrel **140** and the first body **110.**

Not only the light source element **160,** but also other components necessary for the camera module can be disposed on the second substrate **132.** In a surface opposite to the surface where the light source element **160** is disposed, a space is formed due to the gap up to the first substrate **131,** so more components or components having larger heights can be disposed. This is advantageous for miniaturizing the module.

As shown in FIG. 7, the sensor **150** is disposed on the first surface of the first substrate **131** at a position that coincides with an optical axis of the lens. The first substrate **131** may be coupled to the second body **120** through the second coupling member **192** and fixed to the second body **120.** A connector **170** being connected to the outside may be connected to the first substrate **131.** Data can be transmitted to and received from the outside through the connector **170.** Depth images or RGB images can be transmitted externally, or control signals can be received from the control unit. In addition, a power connector **180** being connected to a power source may be connected. The connector **170** and the power connector **180** may be connected in a direction perpendicular to the optical axis. By separating the first substrate **131** and the second substrate **132** in an optical axis direction, since the module size increases in the optical axis direction, connection to the outside or power source can be made in a direction perpendicular to the optical axis, thereby preventing the size increase in an optical direction and increasing the degree of freedom in design can be increased.

As shown in FIGS. 8 and 9, the first substrate **131** may be connected to the second substrate **132** and the third substrate **133,** which is a flexible substrate. The second substrate **132** may be coupled to the second region **111-2** of the first body **110** through the first coupling member **191** and fixed to the first body **110,** and the first substrate **131** may be coupled to the first region **111-1** of the first body **1110** through the second coupling member **192** and fixed to the first body **110.** On the first region **111-1** and the second region **111-2** of the first body **110,** coupling portions that can accommodate the second coupling member **192** and the first coupling member **191** to couple thereto may be respectively formed in a direction toward the substrate. The first coupling member **191** and the second coupling member **192** may be screw-coupling members such as bolts. It is natural that various other coupling members can be used.

The first substrate **131** and the second substrate **132** are coupled and fixed to the first region **111-1** and the second region **111-2** of the first body **110,** which are spaced apart from each other in an optical axis direction. The first substrate **131** and the second substrate **132** are spaced apart by a gap **D1,** and through the gap **D1,** the sensor **150** and the light source element **160** can be disposed close to each other. As described above, the first region **111-1** and the second region **111-2** of the first body 110 may be formed to be spaced apart from each other by **D1,** and according to the spacing between the first region **111-1** and the second region **111-2,** the first substrate **131** and the second substrate **132** may also be disposed to be spaced apart by **D1.** The first substrate **131** and the second substrate **132** are respectively fixed to the first region **111-1** and the second region **111-2** of the first body **110,** which is integrally formed so that the gap between the first substrate **131** and the second substrate **132** can be firmly fixed.

The second body **120** may include a heat sink **123.** The sensor **150** may be an image sensor, and is an element that generates a lot of heat and may be deteriorated due to heat, so heat dissipation is required. The second body **120** is coupled to the first substrate **131** in which the sensor **150** is disposed, and may perform a heat dissipation function by dissipating heat generated by the sensor **150** to the outside. To this end, a heat sink **123** may be included. The heat sink serves to discharge heat to the outside, and the second body **120** may include a heat dissipation pipe, as shown in FIGS. 10 and 11. A heat dissipation pipe is a heat pipe that contains a working fluid in a hollow cylinder and discharges heat to the outside through the working fluid. Or, it may include various heat sinks such as heat dissipation plats. The heat sink **132** of the second body **120** may be formed in the base **121.**

The second body **120** may include a base **121** and a side plate **129** being extended vertically from the base **121.** It includes a base **121** having a planar shape facing the first substrate **131** and a side plate **129** being extended from the base **121** in an optical axis direction. The side plate **129** of the second body **120** may comprise: a body portion **122** being extended from the edge of the base **121;** a first extension portion **126** being extended from the body portion **122;** and a second extension portion **124** adjacent to the first extension **126** and being extended from the body **122** and formed with a coupling hole **125.** The side plate **129** of the second body **120** may include a plurality of side plates **129-1** to **129-4.**

Among the plurality of side plates **129-1** to **129-4,** the first side plate **129-1** may comprise: a body portion **122-1;** a first extension portion **126-1** being extended from the body portion **122-1;** and two second extension portions **124-1** and 124-2 being formed adjacent to both sides of the first extension portion **126-1** and extended from the body portion **122-1,** and respectively formed with coupling holes **125-1** and **125-2.**

The second side plate **129-2** may include: one second extension portion **124-3** being extended from the body portion **122-2** and formed with a coupling hole **125-3;** and two first extension portions **126-2** and **126-3** being formed on both sides of the second extension portion **124-3.** The first side plate **129-1** and the second side plate **129-2** may be adjacent to each other.

The extension lengths of the first extension portion **126** and the second extension portion **124** may be different form each other. The extension length of the first extension portion **126** may be shorter than the extension length of the second extension portion **124.**

The shapes of the first extension portion 126 and the second extension portion **124** being formed on each side plate are similar, but the length, width, and size of the coupling hole **125** being formed may be different from each other.

The second extension **124** may include: a first inclined portion **201** being inclined inward from the body portion **122;** a vertical portion **202** being extended perpendicularly to the body portion **122** from the first inclined portion **201;** and a second inclined portion **203** being extended outward from the vertical portion **202.** At least a portion of the first inclined portion **201** and the second inclined portion **203** may be curved and inclined into a round shape. A coupling hole **125** is formed in the vertical portion **202** so that it can be coupled to the protrusion **114** being formed in the first body **110.**

The third side plate **129-3** facing the first side plate **129-1** may be formed to correspond to the shape of the first side plate **129-1,** and the shape may be different from that of the second side plate **129-2.**

The body portion **122-4** of the fourth side plate **129-4** may include a hole **171** through which the connector **170** being connected to the outside passes or a hole **181** through which the power connector **180** being connected to power source passes. The first side plate **129-1** to the third side plate **129-3** performs coupling with the first body **110,** and the fourth side plate **129-4** may perform connection to the outside.

The side plate **112** of the first body **110** is formed to correspond to the side plate **129** of the second body **120** so that it can be connected to the side plate **129** of the second body **120.**

The side plate **112** of the first body **110** may include: a first accommodating portion **116** in which the first extension portion **126** is accommodated at a position corresponding to the first extension portion **126,** and a second accommodating portion **115** in which the second extension portion **124** is accommodated in a position corresponding to the second extension portion **124,** and includes a protrusion **114** being coupled to the coupling hole **125** of the second extension portion **124.**

Exemplarily, corresponding to the first extension portion **126-1** and second extension portions **124-1** and **124-2** formed on the first side plate **129-1** of the second body **120** of FIG. 10, a first accommodating portion **116-1** and second accommodating portions **115-1** and **115-2** are formed in the first side plate **112-1** of the first body **110** of FIG. 4. A rib is formed in the first accommodating portion **116-1** corresponding to the extension height of the first extension portion **126-1.** The rib of the first accommodating portion **116-1** is formed toward the side plate **129** of the second body **120** to correspond to the extension height of the first extension portion **126-1** only in a portion corresponding to the extension height of the first extension portion **126-1** along the lengthwise direction of the side plate **112-1** of the first body **110.** The width of the rib in the first accommodating portion **116-1** corresponds to the width of the first extension portion **126-1.** In the second accommodating portions **115-1** and **115-2,** ribs are formed throughout the entire region of the side plate **112-1** of the first body **110** along the longitudinal direction regardless of the extension height of the second extension portions **124-1** and **124-2.** The widths of the ribs in the second accommodating portions **115-1** and **115-2** corresponds to the width of the second extension portions **124-1** and **124-2.**

The widths of the first extension portion **126-1** and the second extension portions **124-1** and **124-2** respectively correspond to the widths of the ribs of the first accommodating portion **116-1** and the second accommodating portions **115-1** and **115- 2,** and when coupled, the rib of the first accommodating portion **116-1** and the ribs of the second accommodating portions **115-1** and **115-2** respectively guide the first extension portion **126-1** and the second extension portions **124-1** and **124-2.** In addition, although not shown, the shape of the third side plate **112-3** facing the first side plate 112-1 among the plurality of side plates **112-1** to **112-4** of the first body **110** may be the same as the shape of the first side plate **112-1.** It may have a first accommodating portion (not shown) and a second accommodating portion (not shown) at corresponding positions.

Similarly, corresponding to the first extension portions **126-2** and **126-3** and the second extension portion **124-3** formed on the second side plate **129-2** of the second body **120** of FIG. 10, a first accommodating portions **116-2** and **116-3** and a second accommodating portion **115-3** are formed in the second side plate **112-2** of the first body **110** of FIG. 4. Ribs are formed in the first accommodating portions **116-2** and **116-3** corresponding to the extension height of the first extension portions **126-2** and **126-3.** The ribs of the first accommodating portions **116-2** and **116-3** are formed toward the side plate **129** of the second body **120** to correspond to the extension height of the first extension portions **126-2** and **126-3** only in a portion corresponding to the extension heights of the first extension portions **126-2** and **126-3** along the lengthwise direction of the side plate **112** of the first body **110.** The widths of the ribs in the first accommodating portions **116-2** and **116-3** correspond to the widths of the first extension portions 126-2 and **126-3.** In the second accommodating portion **115-3,** ribs are formed throughout the entire region of the side plate **112** of the first body **110** along the lengthwise direction regardless of the extension height of the second extension portion **124-3.** The width of the rib in the second accommodating portion **115-3** corresponds to the width of the second extension portion **124-3.**

The protrusion **114** of the second accommodating portion **115** is formed to correspond to the coupling hole **125** of the second extension portion **124,** and when coupled, the protrusion **114** is hooked to the coupling hole **125.**

Coupling of the protrusion **114** and the coupling hole **125** prevents the first body **110** and the second body **120** from separating in opposite directions, and the coupling of the first extension portion **126** and the first accommodating portion **116** prevents the first body **110** and the second body **120** from nearing each other in a direction to be facing each other as the first extension portion **126** and the first accommodating portion **116** are come into contact with each other. That is, when the first body **110** and the second body **120** are coupled, movement in both directions of the optical axis can be prevented, and the coupling of the first body **110** and the second body 120 can be firmly maintained.

In order to increase the accuracy of depth images, the separation gap between the light source element **160** and the sensor **150** must be fixed. Because the offset of the flight distance changes when the separation gap between the light source element **160** and the sensor **150** changes, the reliability of depth images being generated from TOF sensors may be degraded. When the light source element **160** and the sensor **150** are disposed on the same substrate, there is no separation gap between the light source element **160** and the sensor **150,** thereby lowering the possibility of occurring such problems, but when the light source element **160** and the sensor **150** are formed in different substrates, the separation gap between the light source element **160** and the sensor **150** may vary, therefore, maintaining the separation gap between the light source element **160** and the sensor **150** is very important.

The first region **111-1** and the second region **111-2** of the first body **110** are spaced apart from each other and are integrally formed, the first substrate **131** is connected to and fixed to the first region **111-1** of the first body **110,** and the second substrate **132** is fixed by connecting the second region **111-2** of the first body **110,** thereby firmly maintaining the gap between the first substrate **131** and the second substrate **132.** Through this, there is an effect of maintaining the reliability of the TOF sensor even if the light source element **160** and the sensor **150** are formed in different substrates in order to dispose the light source element 160 and the sensor **150** close to each other.

Those skilled in the art related to this embodiment will understand that the description described above can be implemented in a modified form without departing from the essential characteristics. Therefore, the disclosed methods should be considered from an explanatory rather than a restrictive perspective. The scope of the present invention is indicated in the claims rather than the foregoing description, and all differences within the equivalent scope should be construed as being included in the present invention.

## Claims

1. A camera module comprising:
a lens barrel accommodating a lens;
a sensor configured to receive light passed through the lens;
a first substrate having the sensor disposed on a first surface thereof;
a second substrate apart from the first substrate and having at least one light source element being disposed thereon;
a first body comprising a lens barrel accommodating portion comprising a first hole in which the lens barrel is accommodated, and a second hole formed in a light-emitting direction of the light source device; and
a second body coupled to the first body,
wherein the first substrate and the second substrate are disposed in the inner space formed by the first body and the second body, and
wherein the sensor comprises a ToF sensor.

2. The camera module according to claim 1, comprising:
a flexible substrate connecting the first substrate and the second substrate.

3. The camera module according to claim 1,
wherein the first body comprises:
an upper plate comprising a first region where the lens barrel accommodating portion formed, a second region apart from the first region in an optical axis direction and where the second hole formed, and a third region connecting the first region and the second region; and
a side plate extended from the upper plate,
wherein the first region and the second region of the upper plate form a step.

4. The camera module according to claim 3,
wherein lens barrel accommodating portion is formed by being extended from the first region and the third region.

5. The camera module according to claim 3, comprising:
a recessed portion formed in the second region and the third region and corresponding to a shape of the lens barrel, in a position corresponding to the lens barrel when the lens barrel is accommodated in a lens barrel accommodating portion.

6. The camera module according to claim 5,
wherein a cross-section of the second hole is in a shape of a cube,
wherein the second hole is inclinedly formed so that a cross-sectional region is expanded in the light-emitting direction of the light source element, and
wherein a surface adjacent to the recessed portion among four inclined surfaces of the second hole comprises a rib formed according to a shape of the recessed portion.

7. The camera module according to claim 3,
wherein the second body comprises:
a base; and
a side plate extended vertically from the base,
wherein the side plate of the second body comprises:
a body portion extended vertically from the base;
a first extension portion extended from the body portion; and
a second extension portion adjacent to the first extension portion and extended from the side plate of the second body, and where a coupling hole formed.

8. The camera module according to claim 7,
wherein the side plate of the first body comprises:
a first accommodating portion in which the first extension portion is accommodated at a position corresponding to the first extension portion; and
a second accommodating portion in which the second extension portion is accommodated at a position corresponding to the second extension portion, and comprising a protrusion coupled to the coupling hole of the second extension portion.

9. The camera module according to claim 7,
wherein the side plate of the second body comprises:
a first side plate comprising one first extension portion and two second extension portions formed at both sides of the one first extension portion; and
a second side plate comprising one second extension portion and two first extension portions formed at both sides of the one second extension portion.

10. The camera module according to claim 1,
wherein a cross-sectional region of the second hole corresponds to a cross-sectional region of the light source element, and is formed to be inclined so as to widen the cross-sectional region in the light-emitting direction.
